**Europäisches Patentamt**

(19) **European Patent Office**

**Office européen des brevets**

(11) Numéro de publication: **0 078 737**

**B1**

(12) **FASCICULE DE BREVET EUROPÉEN**

(45) Date de publication du fascicule du brevet:
15.10.86

(21) Numéro de dépôt: **82401964.0**

(22) Date de dépôt: **26.10.82**

(51) Int. Cl.⁴: **A 01 M 17/00,** A 01 M 25/00,
B 05 C 17/00

(54) Dispositif en forme de canne pour injecter sous terre une substance destinée à faire fuir ou à tuer les animaux indésirables.

(30) Priorité: **26.10.81 FR 8120200**

(43) Date de publication de la demande:
**11.05.83 Bulletin 83/19**

(45) Mention de la délivrance du brevet:
**15.10.86 Bulletin 86/42**

(84) Etats contractants désignés:
**AT BE CH DE FR GB IT LI LU NL SE**

(56) Documents cité:
**FR-A-437 232**
**FR-A-1 506 909**
**FR-A-2 053 868**
**FR-A-2 284 728**
**GB-A-1 179 151**
**US-A-3 550 542**
**US-A-4 081 112**

(73) Titulaire: **Begouen, Jean- Paul, Lombost Archignat, F-03380 Huriel (FR)**

(72) Inventeur: **Begouen, Jean- Paul, Lombost Archignat, F-03380 Huriel (FR)**

(74) Mandataire: **Chanet, Jacques, B.P. 27 95bis avenue de Royat, F-63400 Chamalières (FR)**

LIBER, STOCKHOLM 1986

## Description

La présente invention est du domaine des moyens de lutte contre les animaux nuisibles, particulièrement les taupes, et elle a plus spécialement pour objet un dispositif destiné à déposer dans les lieux fréquentés par ces animaux une substance ayant pour effet soit de les faire fuir, soit de les empoisonner.

On sait les taupes creusent des galeries souterraines qui leur servent à la fois d'habitat et d'appareil nourricier puisque les vers et les insectes souterrains tombent dans ces galeries. On sait aussi que ces galeries débouchent à la surface du sol au travers de petits monticules bien connus sous le nom de taupinières, qui servent de puits d'aération.

Parmi les méthodes de lutte contre les taupes, on a proposé des pièges mécaniques disposés dans ou sur les taupinières; de tels moyens sont cependant peu efficaces car la taupe est un animal extrémement craintif et prudent. On a proposé aussi des cartouches combustibles à base de soufre dégageant au cours de leur combustion de l'anhydride sulfureux ($SO_2$); ces cartouches placées en combustion dans les taupinières ont pour effet d'asphyxier ou au moins de faire fuir les taupes; là encore l'effet est éphémère et les moyens peu efficaces. On a proposé également des poisons destinés à être déposés dans la galerie après avoir effectué une cheminée reliant celle-ci à la surface; ce moyen présente toutefois deux inconvénients: en premier lieu, il nécessite du temps pour creuser une ou plusieurs cheminées avant de déboucher dans la galerie, en second lieu les travaux ainsi effectués ont souvent pour effet d'éloigner la taupe de la cheminée de façon définitive; un autre inconvénient réside aussi dans la manipulation du poison.

Il a été proposé par un brevet FR—A—1506909 (SOVCA) un dispositif comportant un réservoir souple prolongé par un tube perforateur, ce dernier étant destiné à être enfoncé dans la galerie de la taupe; ce dispositif, outre qu'il est de faible longueur, doit être chargé de poison rempli à l'usine. On connaît aussi par un brevet US—A—3 550 542 un dispositif de forme plus allongée destiné à déposer des grains ou des boulettes dans les galeries de taupes. On connaît enfin, notamment par des brevets américains aux noms de Sherbondy et Petterson des pistolets à mastics utilsant des cartouches jetables (US—A—2.602.571 et US—A—2.582.156).

Let but de la présente invention est de proposer un dispositif permettant à la fois de sonder le sol de façon très discrète pour découvrir la galerie, dans le voisinage d'une taupinière, et, le sondage étant positif, d'y déposer une quantité de substance pâteuse dite "taupicide" à effet de poison, ou d'une substance pâteuse dite "taupifuge" ayant pour effet de faire fuir les taupes, Un autre but est de proposer un dispositif évitant tout contact de l'utilisateur avec la substance pâteuse taupicide ou taupifuge. Un autre but est de proposer un dispositif d'utilisation rapide et sans fatigue pour l'utilisateur.

Selon la présente invention, les buts précités sont atteints grâce à un dispositif de lutte contre les animaux souterrains tels que les taupes au moyen des substances pâteuses destinees à faire fuir ou à empoisonner ces animaux correspondant au preambule de la revendication 1, ledit dispositif étant caractérisé en ce qu'il comprend un organe d'extrusion sous la forme d'un pistolet extrudeux à cartouche jetable, pourvu d'une crosse et d'un levier de manoeuvre dit "gâchette", la cartouche formant ledit réservoir de substance pâteuse et en ce qu'audit pistolet extrudeur est sattaché un tube rigide formant le dit conduit d'extrusion en prolongement du pistolet extrudeur ce tube rigide ayant une longueur tell qu'ajoutée à celle du pistolet, la longueur du dispositif soit sensiblement égale à la longueur d'une canne de marche. Il résulte des caractéristiques sus énoncées que la substance pâteuse peut être déposée au-dessous de la surface du sol, dans une galerie par exemple, sans que l'opérateur ait à s'accroupir ou se courber, que le tube rigide sert avantageusement de sonde et que l'injection dans la galerie d'une certaine quantité de subtance est suivie de l'essuyage du tube rigide contre les parois du trou fait par le tube pour atteindre la galerie.

De manière avantageuse, le tube est ouvert, à son extrémité, suivant au moins un orifice latéral; il résulte de cette disposition que la substance pâteuse est injectée de façon sensiblement horizontale dans la galerie et que le risque de bouchage de l'orifice par la terre au cours de l'enfoncement du tube est pratiquement éliminé. Avantageusement encore le pistolet extrudeur utilise une cartouche jetable pourvue elle-même d'un corps cylindrique, d'une buse d'éjection et d'un piston; il résulte de cette disposition que la substance pâteuse peut être introduite en usine dans la cartouche et que l'utilisateur n'a pas à faire lui-même cette manipulation, dangereuse lorsque la substance est un poison; la cartouche est jetée, et de préférence enterrée, lorsqu'elle est vide.

La présente invention sera mieux comprise et des détails de réalisation apparaîtront à la description qui va être faite d'une forme préférée de réalisation, ainsi que du mode d'utilisation, en relation avec les dessins de la planche unique annexée dans laquelle:

—la fig. 1 est une illustration schématique du mode d'utilisation et de la structure générale du dispositif de l'invention,

—la fig. 2 est une représentation en coupe de ce dernier, et

—la fig. 2a est une représentation à plus grande échelle d'une détail de ce dernier.

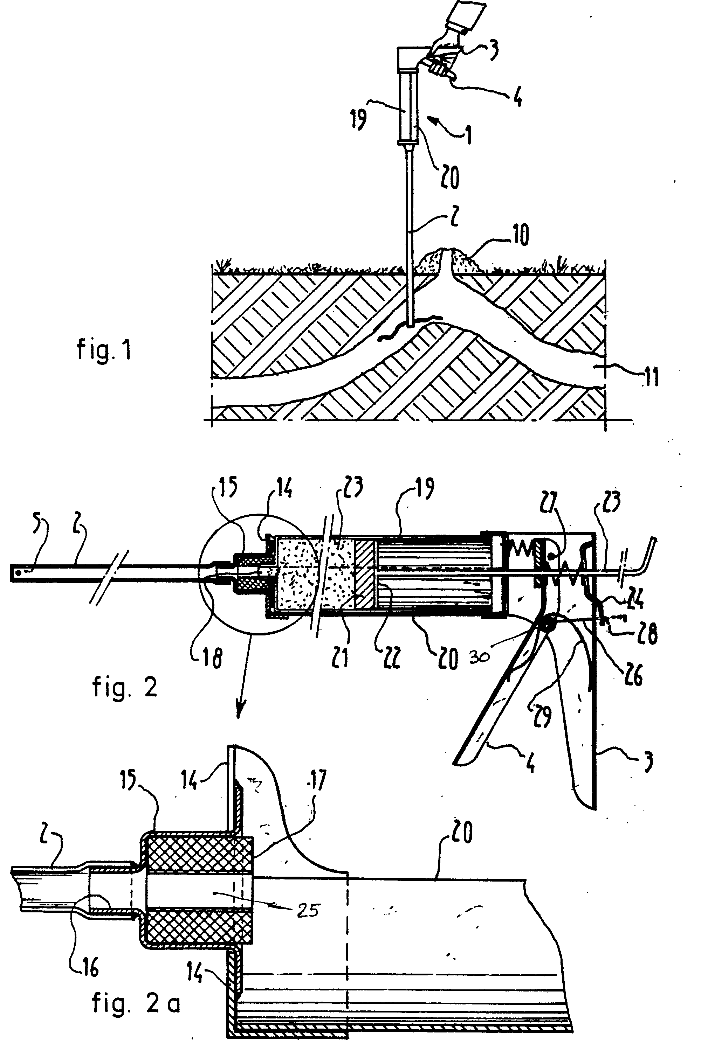

Sur la fig. 1, un dispositif de l'invention est essentiellement constitué d'un pistolet extrudeur 1 prolongé par un tube rigide 2, le pistolet extrudeur comprenant lui-même une crosse 3 et un organe, ou gâchette 4, à fonction de levier; la longueur du dispositif est sensiblement celle d'une canne de promenade.

L'utilisateur parcourant un champ parsemé de taupinières telles que 10 peut, autour de celles-ci, sonder le sol par enfoncement du tube rigide 2 à fonction de sonde; avec un peu d'expérience, il découvrira autour de la taupinière une zone de moindre résistance à l'enfoncement caractéristique de la présence d'une galerie telle qu 11; par pression sur la gâchete 4, il pourra injecter une certaine quantité de substance dans la galerie; l'opération pourra être répétée une ou deux fois autour de chaque taupinière et cela d'une manière très aisée.

Sur les fig. 2 et 2a, un dispositif de l'invention est réalisé par adjonction à un pistolet à mastic, tel que, par exemple, un pistolet décrit dans le brevet américain US—A—4.081.112 ou encore un pistolet à mastic tel que décrit dans le brevet français FR—A—2.284.728, d'un tube rigide 2 à fonction à la fois de conduit et de sonde.

De tels pistolets extrudeurs de mastic sont destinés à utiliser un cartouche jetable du genre constituée d'un corps cylindrique 19 pourvue intérieurement d'un opercule déplaçable 1 et, antérieurement, d'une buse 18 d'extrusion.

Ils sont constitués principalement d'une crosse 3, d'un levier, dit gâchette 4, articulé en 27 sur la crosse, d'un berceau 20 solidaire de la partie antérieure de la crosse et destiné à contenier la cartouche jetable, d'une plaque d'appui 14 solidaire de la partie antérieure du berceau, et d'une tige 23 pourvue à sa partie antérieure d'une piston 22 destiné à appuyer sur ledit opercule, ladite tige étant elle-même en relation avec ladite gâchette pour être déplacée vers l'avant par le pivotement de cette dernière, un mécanisme anti-retour incorporant une pièce à partie apparente dite "chien" 24, empêchant le mouvement arrière de la tige lors du pivotement en retour de la gâchette.

Pour constituer de façon avantageuse un dispositif de l'invention, l'adjonction du tube rigide 2 à un pistolet extrudeur disponible dans le commerce, par exemple tel que l'un de ceux ci-dessus décrits, est réalisée par l'intermédiaire d'une coupelle 15 fixée à ladite plaque d'appui 14, ladite coupelle comportant un ajutage axial 16, sur, ou dans lequel le tube rigide 2 est lui-même emmanché.

Un joint d'étanchéité 17, réalisé en une matière èlastique est logé dans la coupelle, conformée à cette fin; il comporte un conduit axial 25 destiné à recevoir de façon étanche la buse 18 d'une cartouche; de préférence le joint 17 fait légèrement saille à l'intérieur du berceau 20 de manière à fournir à l'extrémité antérieure plane de la cartouche, un appui étanche. La coupelle 15 et le joint 17 sont illustrés particulièrement par la fig. 2a.

Revenant à la fig. 2, on remarque un orifice latéral 5 pratiqué au voisinage de l'extrémité antiérieure du tube 2, et destiné à permettre l'extrusion de la substance 23 contenue dans la cartouche 19. Le tube 2 est obturé à son extrémité antérieure écrasement par exemple; on notera toutefois que l'on ne doit pas rechercher une forme pointue de cette extrémité, qui favoriserait l'enfoncement mais au contraire que l'on doit lui donner une certaine surface entraînant une petite résistance à l'enfoncement qui a pour effet de permettre une meilleure détection de la présence d'une cavité indicative d'une galerie.

Toujours sur la fig. 2, des moyens destiné à éviter un écoulement subséquent de la substance, lors de l'arrêt de la pression manuelle sur la gâchette 4 sont constitués suivant l'invention par une tige 26 accouplée à la gâchette et passant à travers un trou du "chien" 24 derrière lequel elle est recourbée de manière à former un crochet 28 destiné à pousser le chien vers l'avant lorsque la gâchette relâchée arrive en fin de pivotement de retour. Avantageusement un ressort auxiliare 29 bouclé autour d'un axe d'accouplement 30 de la tige 26 à la gâchette 3, tend à aider le pivotement de retour de celle-ci. De tels moyens sont simples et efficaces, contrairement à ceux proposés par l'art antérieur, et ils sont particulièrement nécessaires lorsque la substance est toxique.

**Revendications**

1. Dispositif de lutte contre les animaux souterrains tels que les taupes au moyen de substances pâteuses destinées à faire fuir ou empoisonner ces animaux, ledit dispositif étant du type constitué par un réservoir de ladite substance prolongé par un conduit (2) d'extrusion, l'extrusion de la pâte dudit réservoir étant faite manuellement, caractérisé:

en ce qu'il comprend un organe d'extrusion (1) sous la forme d'un pistolet extrudeur à cartouche jetable (19) pourvu d'une crosse (3) et d'un levier de manoeure (4) dit gâchette, la cartouche formant ledit réservoir de substance pâteuse et en ce qu'au dit pistolet extrudeur est rattaché un tube rigide (2) formant ledit conduit d'extrusion en prolongement du pistolet extrudeur, ce tube rigide ayant une longueur telle qu'ajoutée à celle du pistolet, la longueur de dispositif soit sensiblement égale à la longueur d'une canne de marche.

2. Dispositif selon la revendication 1, caractérisé:

en ce que le tube rigide est ouvert au voisinage de son extrémité suivant au moins un orifice latéral.

3. Dispositif selon la revendication 1, caractérisé:

en ce que l'adjonction du tube rigide (2) au pistolet extrudeur (1) est réalisée par l'intermédiaire d'une coupelle (15) fixée à une plaque d'appui (14), ladite coupelle comportant un ajutage axial (16) sur, ou dans lequel le tube rigide (2) est lui-même emmanché.

4. Dispositif selon la revendication 3, caractérisé:

par un joint d'étanchéité (17) réalisé en une matière élastique, ledit joint étant logé dans ladite coupelle et comportant un conduit axial (25)

destiné à recevoir, de façon étanche, la buse (18) d'une cartouche;

5. Dispositif selon la revendication 4, caractérisé:

en ce que ledit joint (17) fait légèrement saillie à l'intérieur du berceau (20);

6. Dispositif selon la revendication 3 incorporant un pistolet extrudeur pourvu de moyens destinés à éviter un écoulement subséquent lors de l'arrêt de la pression manuelle sur la gâchette, caractérisé:

en ce que lesdits moyens sont constitués par une tige (26) accouplée à la gâchette et passant à travers un trou du "chien" (24) derrière lequel elle est recourbée de manière à former un crochet (28) destiné à pousser le chien vers l'avant lorsque la gâchette relâchée arrive en fin de pivotement de retour;

7. Dispositif selon la revendication 6, caractérisé:

en ce qu'il comporte en outre un ressort auxiliaire (29) destiné à aider le mouvement de retour de la gâchette;

8. Dispositif selon la revendication 2, caractérisé:

en ce que l'extrémité du tube (2) présente une certain surface destinée à entraîner une certaine résistance à l'enfoncement;

9. Dispositif selon la revendication 8, caractérisé:

en ce que ladite certain surface de l'extrémité du tube (2) résulte de l'obturation par écrasement de l'extrémité du tube.

**Patentansprüche**

1. Vorrichtung zum Bekämpfen unterirdischer Schädlinge wie Maulwürfen mittelu pastöser Substanzen, die dazu dienen, diese Tiere zu vertreiben oder zu vergiften, wobei die Vorrichtung einen Vorratsbehälter für die genannte Substanz hat, verlängert durch eine Extrusionsleitung (2), und die Extrusion der Paste aus dem Vorratsbehälter von Hand bewirkt wird,—dadurch gekennzeichnet, daß sie ein Extrusionsorgan (1) in der Form einer Spritzpistole mit einer Wegwerfkartusche (19) umfaßt, versehen mit einem Handgriff (3) und einem Abzug (4) wobi die Kartusche den genannten Vorratsbehälter für die pastöse Substanz bildet und eine Starrhülse (2) die die Verlängerungs - Extrusionsleitung der Spritzpistole bildet, an der Spritzpistole befestigt ist und die Länge der Vorrichtung im wesentlichen gleich der Länge eines Betriebsrohres ist.

2. Vorrichtung nach Anspruch 1, dadurch gekennzeichnet, daß die Starrhülse im Bereich ihres Endes wenigstens eine seitliche Öffnung aufweist.

3. Vorrichtung nach Anspruch 1, dadurch gekennzeichnet, daß die Verbindung zwischen der starren Hülse (2) und der Spritzpistole (1) mittels einer Kapsel (15) verwirklicht ist, die an einer Stüzplatte (14) befestigt ist und die einen axialen Rohransatz (16) aufweist, auf dem die starre Hülse (2) aufgesetzt oder in den diese eingesetzt ist.

4. Vorrichtung nach Anspruch 3, gekennzeichnet durch eine Dichtung (17) aus elastischem Material, die in der Kapsel angeordnet ist und die eine axiale Leitung (25) aufweist, um in dichter Weise die Düse (18) einer Kartusche aufzunehmen.

5. Vorrichtung nach Anspruch 4, dadurch gekennzeichnet, daß die Dichtung (17) geringfügig in das Innere eines Gehäuses (20) hineinragt.

6. Vorrichtung nach Anspruch 3 mit einer Spritzpistole, versehen mit Mitteln zum Vermeiden eines Austretens im Anschluß an das Aufhören des manuellen · Druckes auf den Drücker, dadurch gekennzeichnet, daß die genannten Mittel aus einem Stab (26) bestehen, der an den Drücker angelenkt ist und durch eine Bohrung des sogenannten "Hundes" (24) hindurchgeführt ist, hinter dem er derart gebogen ist, daß er einen Haken (28) bildet, der dazu dient, den Hund dann von vorn her zu schieben, wenn der freigegebene Drücker am Ende seines Rücklaufs ankommt.

7. Vorrichtung nach Anspruch 6, dadurch gekennzeichnet, daß sie außerdem eine Hilfsfeder (29) umfaßt, die dazu dient, die Rückkehrbewegung des Drückers zu fördern.

8. Vorrichtung nach Anspruch 2, dadurch gekennzeichnet, daß das Ende der Hülse (2) eine gewisse Fläche aufweiste, die dazu dient, einen gewissen Widerstand gegen das Eindringen aufzubringen.

9. Vorrichtung nach Anspruch 8, dadurch gekennzeichnet, daß die genannte gewisse Fläche des Endes der Hülse (2) ein Verschließen des Endes der Hülse bewirkt.

**Claims**

1. Device for controlling underground animals, such as moles, by means of paste-like substances intended for repelling or poisoning these animals, the said device being of the type comprising a reservoir of the said substance which is extended by an extrusion pipe (2), the extrusion of the paste from the said reservoir being achieved manually, characterised in that it comprises an extrusion element (1) in the form of an extruder gun with a disposable cartridge (19), which gun is provided with a grip (3) and an operating lever (4) called a trigger, the cartridge forming the said reservoir of paste-like substance, and in that there is connected to the said extruder gun a rigid tube (2) which forms the said extrusion pipe as an extension of the extruder gun, this rigid tube having such a length that, when added to the length of the gun, the length of the device is approximately equal to the length of a walking stick.

2. Device according to Claim 1, characterised in that the rigid tube is open in the vicinity of its end in the direction of at least one lateral orifice.

3. Device according to Claim 1, characterised in that the rigid tube (2) is joined to the extruder gun

4

(1) by way of an obturator (15) which is fastened to a support plate (14), the said obturator comprising an axial adjusting means (16) on or in which the rigid tube (2) itself is fitted.

4. Device according to Claim 3, characterised by a seal (17) made of an elastic material, the said seal being seated in the said obturator and comprising an axial passage (25) which is intended for receiving the nozzle (18) of a cartridge so as to create a seal.

5. Device according to Claim 4, characterised in that the said seal (17) projects slightly inside the cradle (20).

6. Device according to Claim 3 incorporating an extruder gun which is provided with means of preventing subsequent outflow when the manual pressure on the trigger stops, characterised in that the said means comprise a rod (26) connected to the trigger and passing through a hole in the "hammer" (24) after which it is bent so as to form a hook (28) for pushing the hammer forward when the released trigger reaches the end of the pivoting return movement.

7. Device according to Claim 6, characterised in that it also comprises an auxiliary spring (29) for assisting the return movement of the trigger.

8. Device according to Claim 2, characterised in that the end of the tube (2) has a certain surface area for creating a certain resistance to sinking in.

9. Device according to Claim 8, characterised in that the said certain surface area of the end of the tube (2) results from the sealing of the tube end by compression.

0 078 737

fig. 1

fig. 2

fig. 2 a